# EUROPEAN PATENT SPECIFICATION

(11) **EP 2 591 160 B1**
(45) Date of publication and mention of the grant of the patent: **17.03.2021**
(21) Application number: 11803796.9
(22) Date of filing: 06.07.2011
(51) Int. Cl.: H02P 27/08, H02P 21/22, D06F 33/00

(54) **WASHING MACHINE**
WASCHMASCHINE
MACHINE À LAVER

(30) Priority: 06.07.2010 KR 20100065045
(43) Date of publication of application: 15.05.2013
(73) Proprietor: LG Electronics Inc., Seoul 07336 (KR)
(72) Inventor: JUNG, Han Su, Changwon-si Kyungsangnam-do 641-110 (KR); KOO, Ja In, Changwon-si Kyungsangnam-do 641-110 (KR); BAE, Sun Cheol, Changwon-si Kyungsangnam-do 641-110 (KR)
(74) Representative: Ter Meer Steinmeister & Partner
(86) International application number: PCT/KR2011/004946
(87) International publication number: WO 2012/005510

(56) References cited:
- EP-A1- 1 464 749
- EP-A2- 1 265 351
- EP-A2- 1 760 184
- JP-A- H11 319 367
- JP-A- 2003 126 584
- JP-A- 2006 340 743
- JP-A- 2008 000 501
- US-A1- 2005 194 925
- US-B2- 7 589 483

## Description

### Technical Field

The present invention relates to a washing machine, and more particularly to a washing machine for reducing the increase of temperature of an inverter that controls a motor while the washing machine is being operated.

### Background Art

Generally, under the condition that a detergent, wash water, and laundry are placed in a drum of a washing machine, the washing machine washes the laundry not only using a washing tub rotated by the driving power of a motor but also using frictional force of the laundry, so that the laundry is hardly damaged and entangled when washed in the drum, resulting in an increased washing effect.

Meanwhile, the necessity for the motor of the washing machine to be driven in response to various speeds or various cycles is rapidly increasing, so that various methods for effectively operating the motor of the washing machine have been researched by many developers and companies.

EP 1760184 A2 describes a washing machine having an inverter which generates a motor operating signal as an external power is switched by a switching signal. In an example, if a high speed rotation stroke is progressed, a motor is operated as three phase, and in case that a low speed rotation stroke is progressed, the motor is operating as two-phase.

JP 2003 126584 A describes an inverter washing machine. A microcomputer, which controls an inverter circuit supplying a driving voltage to a motor, switches its operating modes between a mode in which the inverter circuit is controlled by a three-phase pulse-width modulation method and a mode in which the inverter circuit is controlled by a two-phase pulse-width modulation method according to the operation condition, such as the rotation speed of the motor.

US 7589483 B2 describes a method of operating a washing machine with an agitator operated by an electronically commutated motor with three stator phases.

EP 1265351 A2 describes a washing machine having an electric motor, a current detector detecting current flowing into the motor, and a torque controller performing a vector control for the motor on the basis of the current detected by the current detector.

EP 1464749 A1 describes an inverter for a washing machine.

US 2005/0194925 A1 describes an apparatus for controlling a three-phase AC motor on a two-phase modulation technique.

### Disclosure of Invention

### Technical Problem

Therefore, the present invention has been made in view of the above problems, and it is an object of the present invention to provide a washing machine for reducing the increase of temperature of an inverter that controls a motor while the washing machine is being operated.

It is another object of the present invention to provide a washing machine that reduces noise of a motor while operated.

### Solution to Problem

The invention is indicated in the independent claim. Further embodiments are indicated in the dependent claims.

In accordance with an aspect of the present invention, the above and other objects can be accomplished by the provision of a washing machine including a washing tub; a motor to rotate the washing tub; and a driving unit to drive the motor using a pulse width modulation (PWM) scheme, to mix a three-phase PWM scheme and a two-phase PWM scheme in a common operation mode, and to drive the motor using the mixed PWM scheme.

In accordance with another aspect of the present invention, a washing machine includes a washing tub; a motor to rotate the washing tub; and an inverter including three pairs of switching elements, each pair having an upper-arm switching element and a lower-arm switching element, in at least some sections from among a period in which upper-arm or lower-arm switching elements of two pairs from among the three pairs of switching elements are repeatedly turned on and off, for mixing a first section in which one switching element of the remaining one pair of from among the three pairs of switching elements is continuously turned on and the other switching element is continuously turned off and a second section in which the upper-arm and lower-arm switching elements of three pairs of switching elements are repeatedly turned on and off, and driving the motor according to the mixed result.

### Advantageous Effects of Invention

As is apparent from the above description of embodiments of the present invention, the washing machine according to the embodiments of the present invention drives a motor for rotating a washing tub using a combination of a 3-phase PWM scheme and a 2-phase PWM scheme, so that it can reduce increase of temperature of an inverter controlling the motor.

Specifically, the washing machine according to the embodiments of the present invention can reduce the increase of temperature using the 2-phase PWM scheme.

Meanwhile, by the 3-phase PWM scheme, the washing machine according to the embodiments of the present invention can reduce noise caused by ripples in an AC signal applied to the motor.

In addition, by the 3-phase PWM scheme, the motor can be correctly driven, so that the amount of laundry and eccentricity can also be correctly detected.

As a result, the above-mentioned washing machine can be effectively driven.

### Brief Description of Drawings

The above and other objects, features and other advantages of the present invention will be more clearly understood from the following detailed description taken in conjunction with the accompanying drawings, in which:
FIG. 1 shows a washing machine according to one embodiment of the present invention;
FIG. 2 is a cross-sectional view illustrating the washing machine shown in FIG. 1;
FIG. 3 is a block diagram illustrating the washing machine shown in FIG. 1;
FIG. 4 is a circuit diagram illustrating a driving unit shown in FIG. 3;
FIG. 5 is a block diagram illustrating an inverter controller shown in FIG. 4;
FIG. 6 shows an example of a switching control signal provided to an inverter shown in FIG. 4;
FIG. 7 shows another example of a switching control signal provided to an inverter shown in FIG. 4;
FIG. 8 is an example of an AC signal provided to the motor shown in FIG. 4;
FIG. 9 is a flowchart illustrating a method for operating the washing machine shown in FIG. 1;
FIG. 10 shows an example of a motor rotation speed in a washing cycle shown in FIG. 9;
FIG. 11 shows an example of a motor rotation speed in a dehydration cycle shown in FIG. 9; and
FIG. 12 shows a washing machine according to another embodiment of the present invention.

### Best Mode for Carrying out the Invention

Embodiments of the present invention will be described below with reference to the attached drawings.

The terms "module" and "unit" used to signify components are used herein to aid in the understanding of the components and thus they should not be considered as having specific meanings or roles. Accordingly, the terms "module" and "unit" may be used interchangeably.

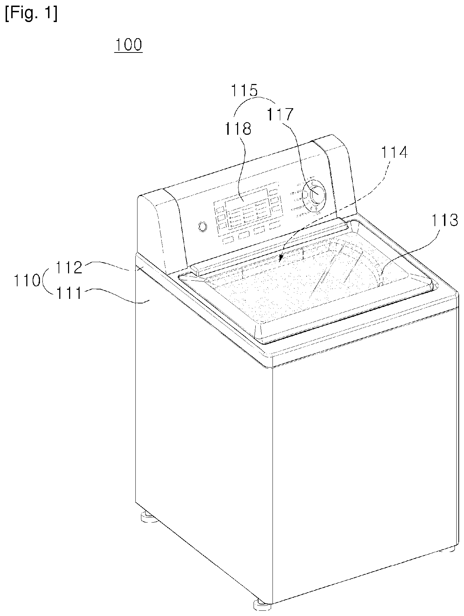

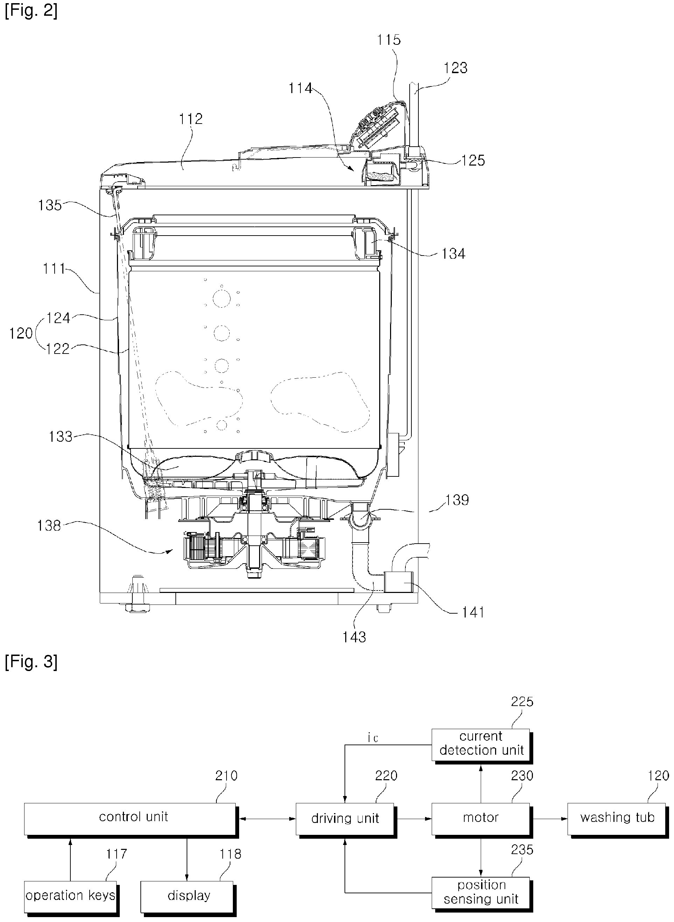

FIG. 1 shows a washing machine according to one embodiment of the present invention. FIG. 2 is a cross-sectional view illustrating the washing machine shown in FIG. 1 according to one embodiment of the present invention.

Referring to FIGS. 1 and 2, although the washing machine 100 according to one embodiment of the present invention is designed to perform washing, rinsing, and dehydration cycles of laundry and may conceptually include a drying machine for drying wet laundry, it should be noted that the following description will focus only upon the washing machine for convenience of description and better understanding of the present invention.

The washing machine 100 includes a casing 110 defining the external appearance thereof; a control panel 115 that includes not only a plurality of operation buttons or keys receiving a variety of control commands from a user but also a display for displaying information regarding an operation state of the washing machine 100, and the like so as to provide a user interface; and a door 113 rotatably coupled to the casing 110 so as to open or close a laundry inlet/outlet hole.

The casing 110 may include a main body 111 forming a space in which a variety of constituent elements of the washing machine 100 are included; and a top cover 112 located above the main body 111 to form a laundry inlet/outlet hole through which laundry can be put into or taken out of an inner tub 122.

Although the casing 110 is designed to include the main body 111 and the top cover 112, the scope or spirit of the casing 110 is not limited thereto and can also be applied to other examples forming the external appearance of the washing machine 100.

In the meantime, although a support rod 135 is exemplarily coupled to the top cover 112 serving as a constituent element of the casing 110, the support rod 135 is not limited thereto and can also be coupled to any fixed part of the casing 110 as necessary.

The control panel 115 includes a plurality of operation keys controlling an operation state of the washing machine 100, and a display 118 arranged at one side of the operation keys 117 to display the operation state of the washing machine 100.

The door 113 may be used to open or close a laundry inlet/outlet hole (not shown) formed in the top cover 112, and may include a transparent member such as tempered glass in such a manner that a user can view the inside part of the main body 111.

The washing machine 100 may include a washing tub 120. The washing tub 120 may include an outer tub 124 containing wash water, and an inner tub 122 that is rotatably coupled to the outer tub 124 and contains laundry. A balancer 134 for compensating for eccentricity generated in rotation of the washing tub 120 may be located above the washing tub 120.

Meanwhile, the washing machine 100 may include a pulsator rotatably coupled to the bottom of the washing tub 120.

A drive device 138 may provide the driving power for rotating the inner tub 122 and/ or the pulsator 133. The drive device 138 may include a clutch (not shown) that selectively transmits drive power of the drive device 138 to the inner tub 122 or the pulsator 133 so that only one of the inner tub 122 or the pulsator 133 may be rotated or both may be simultaneously rotated.

Meanwhile, the drive device 138 is operated by the driving unit 220 (i.e., the driving circuit) shown in FIG. 3, and a detailed description thereof will be given below with reference to FIGS. 1 to 3.

On the other hand, a detergent box 114 including a variety of additives (for example, washing detergent, fabric softener, and/or bleach) is coupled to the top cover 112 in a manner that the detergent box 114 can be drawn from the top cover 112, wash water received through a water-supply channel 123 passes through the detergent box 114 and is then provided to the inner tub 122.

Several holes (not shown) are formed in the inner tub 122, so that wash water provided to the inner tub 122 is provided to the outer tub 124 through such holes. The washing machine 100 may include a water supply valve 125 for opening or closing the water-supply channel 123.

Wash water contained in the outer tub 124 may be drained from the outer tub 124 through a drain channel 143. The washing machine may further include a drain valve 145 for opening or closing the drain channel 143 and a drain pump 141 for pumping wash water.

The support rod 135 suspends the outer tub 124 in the casing 110, one end of the support rod 135 is coupled to the casing 110, and the other end is coupled to the outer tub 124 by a suspension 150.

The suspension 150 absorbs or buffers vibration of the outer tub 124 when the washing machine 100 is operated. For example, the outer tub 124 may be vibrated by vibration generated by the rotating inner tub 122. When the inner tub 122 is rotated, the suspension 150 may absorb or buffer vibration caused by eccentricity of laundry contained in the inner tub 122, various factors (e.g., rotation speed or resonance characteristic) of the inner tub 122, and the like.

FIG. 3 is a block diagram illustrating the washing machine shown in FIG. 1.

Referring to FIG. 3, the washing machine 100 controls the driving unit 220 under the control of a control unit 210, and the driving unit 220 may drive a motor 230. Accordingly, the washing machine 100 rotates the washing tub 120 using the motor 230.

The control unit 210 is operated upon receiving an operation signal from any of the operation keys or buttons 1017, so that the washing, rinsing, and dehydration cycles can be performed.

In addition, the control unit 210 may control the display 118 to display a washing course, a washing time, a dehydration time, a rinsing time, a current operation state, or the like.

The control unit 210 may control the driving unit 220 to operate the motor 230. For example, the control unit 210 may control the driving unit 220 to rotate the motor 230 on the basis of an output current flowing through the motor 230 from a current detection unit 225 and the position signal of the motor 230 from a position sensing unit 220.

Although the detected current signal and the sensed position signal are input to the driving unit 220 in FIG. 3, they are not limited thereto, and may be input to the control unit 210 or may be simultaneously input to all of the control unit 210 and the driving unit 220 as necessary.

The driving unit 220 may be used to drive the motor 230, and may include an inverter (not shown) and an inverter control unit (not shown). In addition, the driving unit 220 may conceptually include a converter capable of providing a DC power to an inverter (not shown).

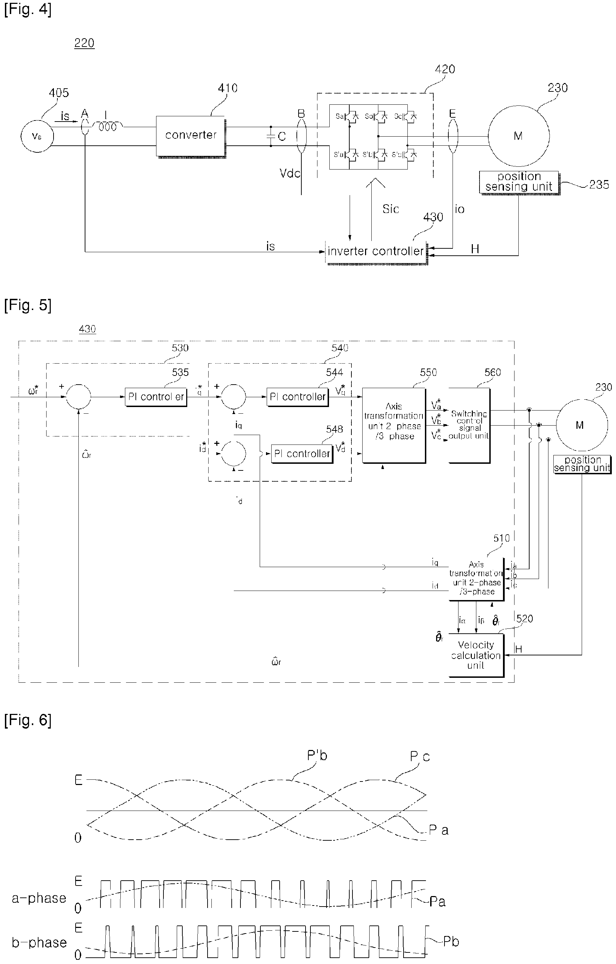

For example, if an inverter controller (not shown) outputs a PWM switching control signal (See Sic of FIG. 4) to the inverter (not shown), the inverter (not shown) performs a high-speed switching operation so that it can provide AC power having a predetermined frequency to the motor 230.

The driving unit 220 will hereinafter be described with reference to FIG. 4.

Referring to FIG. 4, the control unit 210 may detect the amount of laundry on the basis of a current signal (io) detected by the current detection unit 220 or the position signal (H) detected by the position sensing unit 235. For example, while the washing tub 120 is rotated, the control unit 210 may detect the amount of laundry on the basis of a current value (io) of the motor 230.

The control unit 210 may detect the eccentricity of the washing tub 120, i.e., unbalance (UB) of the washing tub 120. Such eccentricity may be detected on the basis of ripples of the current signal (io) detected by the current detection unit 220 or a rotation speed variation of the washing tub 120.

FIG. 4 is a circuit diagram illustrating the driving unit shown in FIG. 3.

Referring to FIG. 4, the driving unit 220 according to one embodiment of the present invention may include a converter 410, an inverter 420, an inverter controller 430, a DC-terminal voltage detector B, a smoothing capacitor C, and an output current detection unit E. In addition, the driving unit 220 may further include an input current detection unit A, a reactor L, and the like.

The reactor L is arranged between a commercial AC power source (vs) 405 and the converter 410 so that it performs power factor correction or a step-up (or boost) operation. In addition, the reactor L may also limit a harmonic current caused by the high-speed switching of the converter 410.

An input-current detector A may detect an input current (is) received from the AC power source 405. In order to detect the input current (is), a current sensor, a current transformer (CT), a shunt resistor, etc. may be used as the input-current detector A. The detected input current (is) is a pulse-shaped discrete signal, and may be input to the control unit 430.

The converter 410 converts the commercial AC power 405 passing through the reactor L into DC power, and outputs the DC power. Although the commercial AC power 405 of FIG. 4 is shown as single-phase AC power, it should be noted that the commercial AC power 405 may also be three-phase AC power as necessary. The internal structure of the converter 410 may be changed according to types of the commercial AC power 405.

Meanwhile, the converter 410 is comprised of a diode and the like, such that it may also perform a rectifying operation without any additional switching operation.

For example, provided that the commercial AC power 405 is a single-phase AC power, four diodes may be bridged to one another. Provided that the commercial AC power 405 is three-phase AC power, 6 diodes may be bridged to one another.

For example, provided that the commercial AC power 405 is single-phase AC power, a half-bridge converter wherein two switching elements and four diodes are connected to one another may be employed. Provided that the commercial AC power 405 is three-phase AC power, 6 switching elements and 6 diodes may be employed.

The converter 410 may include one or more switching elements, such that it can perform a boosting operation, power factor improvement, and DC-power conversion by the switching operation of the corresponding switching elements.

The smoothing capacitor C is connected to an output terminal of the converter 410. The smoothing capacitor C smooths the converted DC power output from the converter 410, and stores the smoothed DC power. Although the smoothing capacitor C is comprised of only one element in FIG. 5, it may also be comprised of a plurality of elements as necessary to guarantee device stability.

For convenience of description, although the smoothing capacitor C is connected to an output terminal of the converter 410, the scope of the smoothing capacitor C is not limited thereto and DC power may be directly input to the smoothing capacitor C. For example, DC power from a solar battery may be directly input to the smoothing capacitor C, or may be DC/DC converted and input to the smoothing capacitor C. The following description will be focused only upon constituent elements shown in the drawings.

DC power is stored at both ends of the smoothing capacitor C, so that both ends may be referred to as a DC terminal or a DC link terminal.

The DC-terminal voltage detector B may detect a DC-terminal voltage (Vdc) of both ends of the smoothing capacitor C. For this operation, the DC-terminal voltage detector B may include a resistor, an amplifier, and the like. The detected DC-terminal voltage (Vdc) is a pulse-shaped discrete signal, and may be input to the inverter controller 430.

The inverter 420 includes a plurality of inverter switching elements, converts the DC power smoothed by on/off operation of the switching elements into three-phase AC power (va, vb, vc) of a predetermined frequency, and outputs the resultant three-phase AC power (va, vb, vc) to a three-phase motor 230.

The inverter 220 includes upper-arm switching elements (Sa, Sb, Sc) and lower-arm switching elements (S'a, S'b, S'c). In more detail, the inverter 220 includes a total of three pairs (Sa&S'a, Sb&S'b, Sc&S'c) of upper-arm and lower-arm switching elements, wherein the three pairs (Sa&S'a, Sb&S'b, Sc&S'c) are connected to one another in parallel. In addition, one upper-arm switching element (Sa, Sb or Sc) is connected in series to one lower-arm switching element (S'a, S'b or S'c) such that one pair (Sa&S'a, Sb&S'b or Sc&S'c) of upper-arm and lower-arm switching elements is formed. One diode is connected in inverse parallel to one switching element (Sa, S'a, Sb, S'b, Sc or S'c).

The switching elements contained in the inverter 420 receive an inverter switching control signal (Sic) from the inverter controller 430, such that on/off operations of the individual switching elements are performed on the basis of the inverter switching control signal (Sic). As a result, a three-phase AC power having a predetermined frequency is output to the three-phase synchronous motor 230.

The inverter controller 430 may control the switching operation of the inverter 420. For this operation, the inverter controller 430 may receive an output current (io) detected by the output current detection unit E as an input.

The inverter controller 430 may output the inverter switching control signal (Sic) to the inverter 420 so as to control the switching operation of the inverter 420. The inverter switching control signal (Sic) may be a PWM switching control signal, and is generated and output on the basis of the output current value (io) detected by the output current detection unit E. The output of the inverter switching control signal (Sic) will hereinafter be described with reference to FIG. 5.

The output current detection unit (E) detects an output current (io) flowing between the inverter 420 and the three-phase motor 230. In other words, the output current detection unit (E) may detect a current flowing in the motor 230. The output current detection unit E may detect all output currents (ia, ib, ic) of individual phases, or may also detect a two-phase output current using three-phase equilibrium.

The output current detection unit (E) may be located between the inverter 420 and the motor 230. For current detection, a current transformer (CT), a shunt resistor, or the like may be used as the output current detection unit (E).

When using the shut resistor, three shunt resistors may be located between the inverter 420 and the synchronous motor 230, or may be coupled to one end of each of the three lower-arm switching elements (S'a, S'b, S'c) of the inverter 420. Meanwhile, two shunt resistors may be used using three-phase equilibrium. In contrast, when using only one shunt resistor, a corresponding shunt resistor may be arranged between the above-mentioned capacitor C and the inverter 420.

The detected output current (io) serving as a pulse-shaped discrete signal may be input to the inverter controller 430, and an inverter switching control signal (Sic) may be generated on the basis of the detected output current (io). For convenience of description and better understanding of the present invention, it is assumed that the detected output current (io) is three-phase output currents (ia, ib, ic).

The three-phase motor 230 includes a stator and a rotor. AC power of each phase having a predetermined frequency is applied to a coil of a stator of each phase such that the rotor starts rotating.

Various types of motors 230 may be used, for example, a Surface-Mounted Permanent-Magnet Synchronous Motor (SMPMSM), an Interior Permanent Magnet Synchronous Motor (IPMSM), a Synchronous Reluctance Motor (Synrm), etc. SMPMSM or IPMSM may be a Permanent Magnet Synchronous Motor (PMSM), and Synrm has no permanent magnet.

If the converter 410 includes one or more switching elements, the inverter controller 430 may control the switching operation of the switching element contained in the converter 410. For this operation, the inverter controller 430 may receive the input current (is) detected by the input current detection unit A. The inverter controller 430 may output a converter switching control signal (Scc) to the converter 410 to control the switching operation of the converter 410. The converter switching control signal (Scc) may be a PWM switching control signal, and may be generated and output on the basis of the input current (is) detected by the input current detection unit A.

The position sensing unit 235 may detect the rotator position of the motor 230. For this operation, the position sensor 235 may include a hall sensor. The sensed rotor position H is input to the inverter controller 430 and is used as a reference for velocity calculation or the like.

FIG. 5 is a block diagram illustrating an inverter controller shown in FIG. 4.

Referring to FIG. 5, the inverter controller 430 includes a first axis transformation unit 510, a velocity calculation unit 520, a current command generator 530, a voltage command generator 540, a second axis transformation unit 550, and a switching control signal output unit 560.

The axis transformation unit 510 receives three-phase output current (ia, ib, ic) detected by the output current detection unit E, and converts the three-phase output current (ia, ib, ic) into two-phase current (iα, iβ) of a stationary reference frame (also called a stationary coordinate system).

The axis transformation unit 510 may convert the two-phase current (iα, iβ) of the stationary reference frame into two-phase current (id, iq) of a rotation coordinate system.

The velocity calculation unit 520 may calculate speed or velocity (ω̂*ᵣ*) on the basis of the rotor position signal (H) received from the position sensing unit 235. That is, if the rotor position signal is divided on a time axis, the velocity calculation unit 520 may calculate the speed thereof.

On the other hand, the velocity calculation unit 520 may calculate the calculated position (θ̂*ᵣ*) and the calculated speed (ω̂*ᵣ* ) on the basis of the rotor position signal (H).

The current command generator 530 generates a current command value (i*_{q}) on the basis of the calculated speed (ω̂*ᵣ*) and the speed command value (ω*ᵣ). For example, the current command generator 530 enables the PI controller 535 to perform Proportional Integral (PI) control on the basis of a difference between the calculated speed (ω̂*ᵣ*) and the speed command value (ω*ᵣ), such that it can generate the current command value (i*_{q}). Although the q-axis current command value (i*_{q}) has been exemplarily used as a current command value in FIG. 5, it should be noted that a d-axis current command value (i*_{d}) may also be generated simultaneously with the q-axis current command value (i*_{q}). In contrast, the d-axis current command value (i*_{d}) may be set to zero (0).

In the meantime, the current command generator 530 may further include a limiter (not shown) preventing a level of each current command value (i*_{q}) from exceeding an allowed range.

The voltage command generator 540 generates d-axis and q-axis voltage command values (v*_{d} and v*_{q}) on the basis of not only the d-axis and q-axis currents (id and iq) axis-transformed to a two-phase rotation coordinate system but also the current command values (i*_{d} and i*_{q}) from the current command generator 530. For example, the voltage command generator 540 enables the PI controller 544 to perform PI control on the basis of a difference between the q-axis current value (iq) and the q-axis current command value (i*_{q}), such that it can generate the q-axis voltage command value (v*_{q}). In addition, the voltage command generator 540 enables the PI controller 544 to perform PI control on the basis of a difference between the d-axis current value (id) and the d-axis command value (i*_{d}), such that it can generate the d-axis voltage command value (v*_{d}). In the meantime, the voltage command generator 540 may further include a limiter (not shown) preventing a level of each voltage command value (v*_{d} or v*_{q}) from exceeding an allowed range.

The generated d-axis and q-axis voltage command values (v*_{d} and v*_{q}) may be input to the axis transformation unit 550.

The axis transformation unit 550 may receive the position (*θᵣ*) calculated by the velocity calculation unit 520 and the d-axis and q-axis voltage command values (v*_{d} and v*_{q}), and may then perform axis transformation of the received signals (*θ̂ᵣ*, v*_{d} and v*_{q}).

First, the axis transformation unit 550 may convert a two-phase rotation coordinate system into a two-phase stationary coordinate system. In this case, the axis transformation init 550 may use the position signal (*θᵣ* ) calculated by the velocity calculation unit 520. In addition, the axis transformation unit 550 may convert the two-phase stationary coordinate system into a three-phase stationary coordinate system. By the above-mentioned transformation, the axis transformation unit 550 may output three-phase output voltage command values (v*ₐ, v*_{b}, v*_{c}).

The switching control signal output unit 560 may generate and output a switching control signal (Sic) for a PWM inverter on the basis of the three-phase output voltage command values (v*ₐ, v*_{b}, v*_{c}).

The output inverter switching control signal (Sic) may be converted into a gate drive signal by a gate driver (not shown), so that it may be input to a gate of each switching element contained in the inverter 420. As a result, individual switching elements (Sa, S'a, Sb, S'b, Sc, S'c) contained in the inverter 420 may perform the switching operation.

Specifically, one embodiment of the present invention may generate and output an inverter switching control signal (Sic) in which a two-phase PWM scheme and a three-phase PWM scheme are mixed.

Such mixed driving of the two-phase PWM scheme and the three-phase PWM scheme may be performed in different ways according to individual cycles (washing, rinsing, and dehydration cycles), or may be performed in different ways according to a laundry or eccentricity amount detected in each cycle, or according to respective temperatures or respective rotation speeds of the motor.

As a result, the above-mentioned mixed driving may reduce the increase of temperature of the inverter 420 when the motor 230 is driven, and may also reduce noise caused by current ripples when the motor starts to operate.

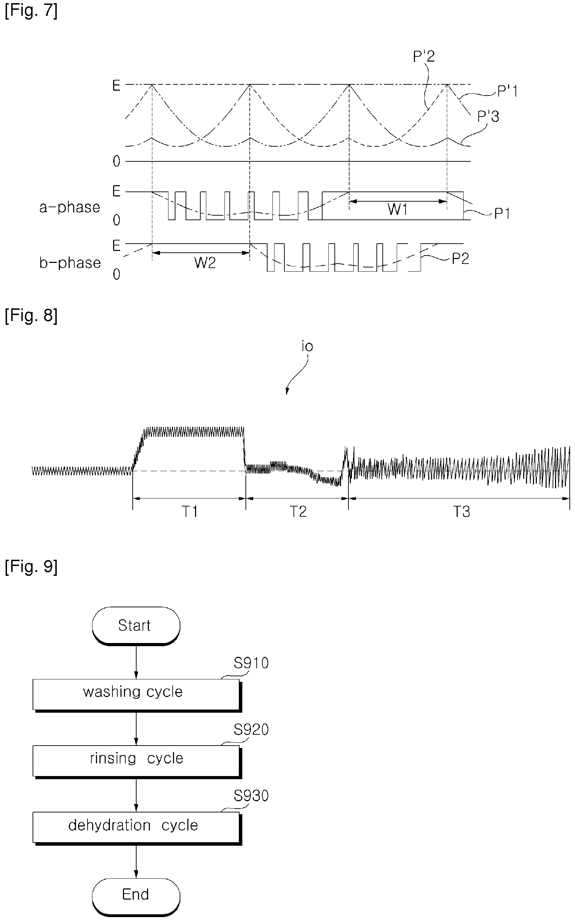

FIG. 6 shows an example of a switching control signal provided to an inverter shown in FIG. 4. FIG. 7 shows another example of a switching control signal provided to an inverter shown in FIG. 4.

FIG. 6 shows a three-phase PWM switching control signal output from the inverter controller 430.

A three-phase PWM switching control signal (Pa) may be input to the gate of the upper-arm switching element (Sa) contained in the inverter 420, and a three-phase PWM switching control signal (Pb) may be input to the gate of the upper-arm switching element (Sb) of the inverter 420. Although not shown in the drawings, a three-phase PWM switching control signal may be input to the upper-arm switching element (Sc) of the inverter 420. A switching control signal complementary to the upper-arm switching elements (Sa, Sb, Sc) may be input to lower-arm switching elements (S'a, S'b, S'c) of the inverter 420. That is, a turn-on operation and a turn-off operation may be performed in reverse order.

As shown in the drawings, the filtered signals (P'a, P'b, P'c) of the three-phase PWM switching control signal applied to three upper-arm switching elements may be represented in sinusoidal waves.

In accordance with the three-phase PWM scheme according to one embodiment of the present invention, three pairs of switching elements are designed to repeat turn-on and turn-off operations. In other words, compared to the two-phase PWM scheme of FIG. 6, the three-phase PWM scheme may continuously perform the switching operation without generating an additional deadband, such that it does not generate high-frequency noise caused by the switching operation.

If one or more switching elements of the inverter 420 is driven according to the three-phase PWM scheme, the motor 230 can be correctly driven. Therefore, the above-mentioned three-phase PWM scheme can be performed when sensing the amount of laundry or the amount of eccentricity so that the motor 230 can be correctly driven. On the other hand, according to the three-phase PWM scheme, noise caused by current ripples can be reduced when the motor 230 is driven.

On the other hand, the three-phase PWM scheme may unexpectedly cause the temperature of the inverter 420 to be increased due to high-speed switching, so that the three-phase PWM scheme is preferably performed at low-speed rotation required for sensing the amount of laundry or eccentricity. Or the three-phase PWM scheme may also be performed at a predetermined temperature or less.

FIG. 7 shows a two-phase PWM switching control signal output from the inverter controller 430.

The two-phase PWM switching control signal PI may be input to a gate of the upper-arm switching element (Sa) of the inverter 420. The two-phase PWM switching control signal P2 may be input to a gate of the upper-arm switching element (Sb) of the inverter 420. Although not shown in the remaining drawings, the two-phase PWM switching control signal may be input to a gate of the upper-arm switching element (Sc) of the inverter 420. A switching control signal complementary to the upper-arm switching elements (Sa, Sb, Sc) may be input to the lower-arm switching elements (S'a, S'b, S'c) of the inverter 420. That is, the turn-on operation and the turn-off operation may be performed in reverse order.

As can be seen from the drawings, in accordance with the two-phase PWM scheme according to one embodiment of the present invention, during at least one section W1 or W2 from among a predetermined period in which upper-arm or lower-arm switching elements of two pairs from among three pairs of upper-arm or lower-arm switching elements repeat the turn-on and turn-off operations, one switching element contained in the remaining one pair of switching elements from among three pairs of switching elements continuously stays in the turn-on state and the other switching element continuously stays in the turn-off state. In this case, a certain section may be a section corresponding to an electric angle of 120° of the motor. As described above, one pair of switching elements may stays in the turn-on state or in the turn-off state without any repeated switching, such that switching loss can be reduced. For convenience of description, the above-mentioned certain section may be referred to as a deadband section.

That is, as shown in the drawings, the filtered signals (P'1, P'2, P'3) of the two-phase PWM switching control signal applied to the three-phase upper-arm switching element may be represented in partial sinusoidal waves having a predetermined level in some sections W1 or W2.

If the switching elements contained in the inverter 420 are driven according to the two-phase PWM scheme, three upper-arm switching elements (Sa, Sb, Sc) or three lower-arm switching elements (S'a, S'b, S'c) are not repeatedly turned on or off, two upper-arm switching elements (e.g., Sa, Sb) or two lower-arm switching elements (e.g., S'a, S'b) are repeatedly turned on or off, and the remaining upper-arm switching element (e.g., Sc) or the remaining lower-arm switching element (e.g., S'c) may continuously stay in the turn-on or turn-off state, so that the number of high-speed switching times can be reduced, resulting in a reduction of the increase of temperature of the inverter 420.

On the other hand, the two-phase PWM scheme can reduce the number of turn-on/turn-off times for the switching, but it can also provide a sinusoidal current signal to the motor 230 in the same manner as in the three-phase PWM scheme. As a result, there may arise no difference in actual operation rate between the two-phase PWM scheme and the three-phase PWM scheme.

Therefore, the two-phase PWM scheme is preferably performed at high-speed rotation such as a dehydration cycle. Or, the two-phase PWM scheme may be performed at a predetermined temperature or greater.

FIG. 8 is an example of an AC signal provided to the motor shown in FIG. 4.

Current flowing in the motor 230 in response to the switching operation of the inverter 420 is shown in FIG. 8.

In more detail, the operation section of the motor 230 may be divided into a start operation section T1 acting as an initial operation section and a common operation section T3 after the lapse of the start operation section T1.

During the start operation section T1, a predetermined current is input to the motor 230. For this operation, any one of three upper-arm switching elements of the inverter 420 is turned on, and the remaining two lower-arm switching elements unpaired with the turn-on upper-arm switching element are turned on. The predetermined current may be a few amperes (A). In order to provide the predetermined current to the motor, the inverter controller 420 may input the start switching control signal (Sic) to the inverter 420.

During the common operation section T3, the detected output current (io) is fed back and controlled in the inverter controller 430 on the basis of the output current (io) as shown in FIG. 5, so that AC power having a predetermined frequency may be input to the motor 230.

Specifically, according to one embodiment of the present invention, the detected output current (io) is fed back during the common operation section T3, so that control of the resultant signal is processed in the inverter controller 430 on the basis of the detected output current (io) as shown in FIG. 5. At this time, the above-mentioned two-phase PWM scheme and the three-phase PWM scheme are mixed and driven, so that increase of temperature of the inverter 420 can be restricted and noise caused by driving the motor 230 can also be reduced.

On the other hand, a mandatory acceleration section T2 for compulsorily increasing the motor speed may be further located between the initial operation section T1 and the common operation section T3. During the mandatory acceleration section T2, the speed of the motor 230 is increased in response to a speed command without feeding back the current (io) flowing in the motor 230. The inverter controller 430 may output the corresponding switching control signal (Sic).

FIG. 9 is a flowchart illustrating a method of operating the washing machine shown in FIG. 1.

Referring to FIG. 9, a method of operating the washing machine is largely classified into a washing cycle S910, a rinsing cycle S920, and a dehydration cycle S930.

During the washing cycle S910, a laundry-amount sensing section for sensing the amount of laundry contained in the washing tub 120, an eccentricity sensing section for sensing unbalance of the laundry, and a main washing machine section may be implemented, and other examples may also be used as necessary.

During the rinsing cycle S920, a water supply section, a predetermined speed rotation section, a drainage section, and the like may be present, and other examples may also be used as necessary.

During the dehydration cycle S930, a laundry-amount sensing section for sensing the amount of laundry contained in the washing tub 120, an eccentricity sensing section for sensing an unbalance state of the laundry, a preliminary dehydration section, a main dehydration section, and the like may be implemented, and other examples may also be used as necessary.

In accordance with one embodiment of the present invention, if the three-phase PWM scheme and the two-phase PWM scheme are mixed and driven, the motor 230 may be driven according to the two-phase PWM scheme during at least one of the washing cycle S910 and the rinsing cycle S920, each of which does not require a high-speed rotation. In the dehydration cycle S930 requiring high-speed rotation, the motor 230 may be driven according to the three-phase PWM scheme. As a result, the increase of temperature of the inverter 420 can be restricted, and noise caused by the drive motor 230 can also be reduced.

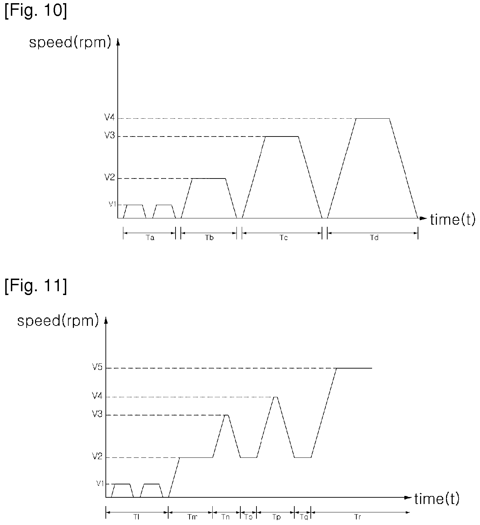

FIG. 10 shows an example of a motor rotation speed in the washing cycle shown in FIG. 9.

Referring to FIG. 10, the washing cycle of FIG. 10 may include a laundry-amount sensing section Ta, an eccentricity sensing section Tb, a first washing section Tc and a second washing section Td.

In the laundry-amount sensing section Ta, the amount of laundry contained in the washing tub 120 is detected. In more detail, the amount of laundry can be detected by forward or reverse rotation or repeated forward/reverse rotation of the washing tub at a first rotation speed (v1). In more detail, the amount of laundry can be detected on the basis of the output current (io) of the motor 230 or ripples of the output current (io).

In contrast, prior to the execution of the laundry-amount sensing section Ta, the washing machine according to the present invention may further execute a laundry-distribution section (not shown) in which laundry of the washing tub 120 can be distributed. The laundry-distribution section (not shown) may distribute laundry by forward or reverse rotation or repeated forward/reverse rotation of the washing tub 120 at a speed lower than the first rotation speed (v1).

In the eccentricity sensing section Tb, the eccentricity (UB) of laundry contained in the washing tub 120 can be detected. In more detail, the washing tub 120 is rotated at a second rotation speed (v2) so that the eccentricity can be detected. In more detail, the eccentricity can be detected on the basis of the output current (io) of the motor 230 or ripples of the output current (io).

In the first washing section Tc or the second washing section Td, if the eccentricity detected in the eccentricity sensing section Tb is equal to or less than a predetermined allowable eccentricity, the washing tub 120 may be rotated at a third rotation speed (v3) and a fourth rotation speed (v4). Under the condition that water supply is completed before the first washing section Tc or the second washing section Td, detergent may be placed in the washing tub 120 so that laundry can be washed. Thereafter, water may be drained out of the washing tub 120.

On the other hand, according to one embodiment of the present invention, in the laundry-amount sensing section Ta or the eccentricity sensing section Tb from among the washing process, the motor 230 may be driven according to the three-phase PWM scheme. In the remaining first and second washing sections Tc and Td other than the sensing sections Ta and Tb, the motor 230 may be driven according to the two-phase PWM scheme. As a result, in the laundry-amount sensing section Ta or the eccentricity sensing section Tb for which accurate measurement is needed, the motor 230 can be correctly driven. In addition, temperature of the inverter 420 can be prevented from increasing.

FIG. 11 shows an example of a motor rotation speed in the dehydration cycle shown in FIG. 9.

Referring to FIG. 11, the dehydration cycle may include a laundry-amount sensing section T1, a first eccentricity sensing section Tm, a first dehydration section Tn, a second eccentricity sensing section To, a second dehydration section Tp, a third eccentricity sensing section Tq, and a third dehydration section Tr.

In the laundry-amount sensing section T1, the amount of laundry contained in the washing tub 120 can be detected. In more detail, the amount of laundry may be detected by forward or reverse rotation or repeated forward/reverse rotation at a first rotation speed (v1). In more detail, the amount of laundry can be detected on the basis of the output current (io) of the motor 230 or ripples in the output current (io).

In contrast, prior to execution of the laundry-amount sensing section T1, the washing machine according to the present invention may further execute a laundry-distribution section (not shown) in which laundry in the washing tub 120 can be distributed. The laundry-distribution section (not shown) may distribute laundry by forward or reverse rotation or repeated forward/reverse rotation of the washing tub at a speed lower than the first rotation speed (v1).

In the first to third eccentricity sensing sections (Tm, To, Tq), the amount of eccentricity (UB) of laundry contained in the washing tub 120 can be detected. In more detail, the washing tub 120 is rotated at a second rotation speed (v2) so that the eccentricity can be detected. In more detail, the eccentricity can be detected on the basis of the output current (io) of the motor 230 or ripples in the output current (io).

In the first to third dehydration sections (Tn, Tp, Tr), if the eccentricity detected during the first to third eccentricity sensing sections (Tm, To, Tq) is equal to or less than a predetermined allowable eccentricity, the washing tub 120 can be rotated at third to fifth rotation speeds (v3, v4, v5), respectively. Under the condition that water supply is completed prior to the first dehydration section Tn, the dehydration cycle may be performed. If necessary, water may be drained from the washing tub during execution of the dehydration process.

On the other hand, according to the present invention, in the laundry-amount sensing section T1 or the eccentricity sensing section (Tm, To or Tq) from among the dehydration cycle, the motor 230 may be driven according to the three-phase PWM scheme. In the remaining first to third dehydration sections (Tn, Tp, Tr) other than the sensing section, the motor 230 may be driven according to the two-phase PWM scheme. As a result, in the laundry-amount sensing section T1 or the eccentricity sensing section (Tm, To, Tq) in which accurate measurement is needed, the motor 230 can be correctly driven. In addition, temperature of the inverter 420 can be prevented from increasing.

Meanwhile, differently from the drawings, not all the first to third eccentricity sensing sections (Tm, To, Tq) are carried out, but only the first eccentricity sensing section Tm may be carried out as necessary.

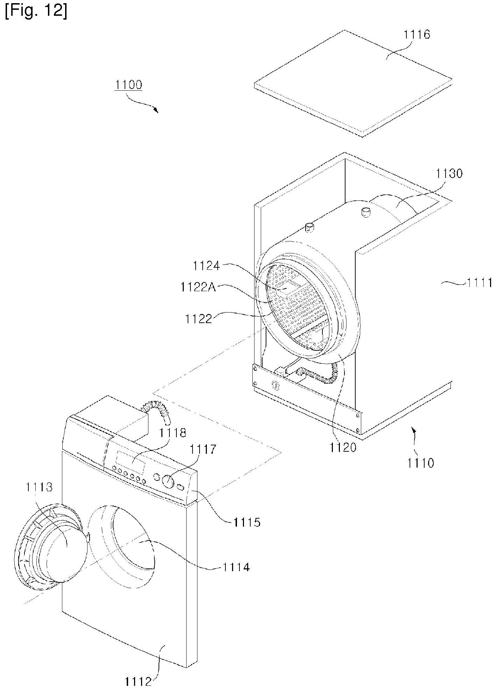

FIG. 12 shows a washing machine according to another embodiment of the present invention.

The washing machine shown in FIG. 12 is a front-load-type washing machine compared to the top-load-type washing machine of FIG. 1.

The washing machine 1100 includes a cabinet 1110 forming the external appearance of the washing machine 1100; a tub 1120 located in the cabinet 1110 and supported by the cabinet 1110; a drum 1122 located in the tub 1120 so as to wash laundry; a water supply device (not shown) mounted at the outside of a cabinet main frame 1111 so as to provide the cabinet 1110 with wash water; and a drain device (not shown) located under the tub 1120 so as to drain wash water from the tub 1120.

The drum 1122 may include a plurality of through-holes 1122A through which wash water passes. The lifter 1124 enables laundry to move upward to a predetermined height within the drum 1122 in response to rotation of the drum 1122, and enable the laundry located at the predetermined height to move downward in the drum 1122 according to gravity.

The cabinet 1110 may include a cabinet main frame 1111; a cabinet cover 1112 mounted at the front surface of the cabinet main frame 1111 and coupled to the cabinet main frame 1111; a control panel 1115 mounted at an upper part of the cabinet cover 1112 and coupled to the cabinet main frame 1111; and a top plate 1116 mounted at an upper part of the control panel 1115 and coupled to the cabinet main frame 1111.

The cabinet cover 1112 may include a laundry inlet/output hole through laundry can be put into or taken out of the drum 1122, and a door 1113 rotatably coupled to the cabinet cover 1112 in such a manner that the laundry inlet/output hole 1114 can be opened or closed.

The control panel 1115 may include operation keys 1117 for handling an operation state of the washing machine 1110, and a display 1118 mounted at one side of the operation keys to display an operation state of the washing machine 1110.

The operation keys 1117 of the control panel 1115 and the display 1118 may be electrically coupled to the control unit (not shown), and the control unit (not shown), and the control unit (not shown) may control respective constituent elements of the washing machine 1100.

When the motor 1130 is driven to rotate the drum 1122, the washing machine 1200 of FIG. 12 may be driven according to a mixed version of the three-phase PWM scheme and the two-phase PWM scheme in the same manner as in the conventional washing machine 100 of FIG. 1. That is, the switching control signal shown in FIG. 6 or 7 is input to the inverter so that the motor 1130 can be driven.

Such mixed driving of the two-phase and three-phase PWM schemes may be performed in different ways according to individual cycles (washing, rinsing, and dehydration cycles), or may be performed in different ways according to a laundry amount or eccentricity detected in each cycle, or according to respective temperatures or respective rotation speeds of the motor.

As a result, the above-mentioned mixed driving may reduce the increase of temperature of the inverter when the motor 1130 is driven, and may also reduce noise caused by current ripples while the motor starts operation.

The washing machine according to the foregoing exemplary embodiments is not restricted to the exemplary embodiments set forth herein. Therefore, variations and combinations of the exemplary embodiments set forth herein may fall within the scope of the present invention.

The washing machine according to the foregoing exemplary embodiments may be implemented as code that can be written on a computer-readable recording medium and thus read by a processor. The computer-readable recording medium may be any type of recording device in which data is stored in a computer-readable manner.

While the present invention has been particularly shown and described with reference to exemplary embodiments thereof, it will be understood by those of ordinary skill in the art that various changes in form and detail may be made without departing from the scope of the present invention as defined by the following claims.

### Industrial Applicability

The present invention is applied to a washing machine for reducing the increase of temperature of an inverter.

## Claims

1. A washing machine (100) comprising:
a washing tub (120);
a motor (230) to rotate the washing tub; and
a driving unit (220) to drive the motor (230) by an operation section of the motor,
wherein the driving unit (220) comprises:
an inverter (420) to convert predetermined DC power into AC power having a predetermined frequency, and to output the AC power to the motor;
an output current detection unit (E) to detect output current (io) flowing in the motor, and
an inverter controller (430) to control the inverter in response to the output current,
wherein the inverter (420) includes three pairs of switching elements, each pair including an upper-arm switching element (Sa, Sb, Sc) and a lower-arm switching element (S'a, S'b, S'c),
wherein during a laundry-amount sensing section (T1), the washing tub (120) rotates at a first rotation speed (v1),
wherein during a first eccentricity sensing section (Tm) after the laundry-amount sensing section (T1), the washing tub (120) rotates at a second rotation speed (v2) higher than the first rotation speed (v1),
wherein during a first dehydration section (Tn) after the first eccentricity sensing section (Tm), the washing tub (120) rotates at a third rotation speed (v3) higher than the second rotation speed (v2),
wherein during a second eccentricity sensing section (To) after the first dehydration section (Tn), the washing tub (120) rotates at the second rotation speed (v2) lower than the third rotation speed (v3),
wherein the driving unit (220) is configured to drive the motor (230) using a pulse width modulation (PWM) scheme, to mix a three-phase PWM scheme and a two-phase PWM scheme in a common operation mode, and to drive the motor using the mixed PWM scheme,
wherein the motor (230) is driven based on the three-phase PWM scheme in the laundry-amount sensing section (T1), the first eccentricity sensing section (Tm), and the second eccentricity sensing section (To),
wherein the motor (230) is driven based on the two-phase PWM scheme in the first dehydration section (Tn),
wherein in the three-phase PWM scheme, three pairs of switching elements (Sa, Sb, Sc, S'a, S'b, S'c) repeat turn-on and turn-off operations, and
wherein in the two-phase PWM scheme, upper-arm switching elements (Sa, Sb) and lower-arm switching elements (S'a, S'b) of two pairs among three pairs of switching elements (Sa, Sb, Sc, S'a, S'b, S'c) repeat turn-on and turn-off operations, and one of an upper-arm switching element (Sc) or a lower-arm switching element (S'c) in the remaining one pair among three pairs of switching elements (Sa, Sb, Sc, S'a, S'b, S'c) stays in a turn-on state and the other one of the upper-arm switching element (Sc) or the lower-arm switching element (S'c) in the remaining one pair stays in a turn-off state.

2. The washing machine according to claim 1, wherein the operation section of the motor is divided into a start operation section (T1), a mandatory acceleration section (T2) for compulsorily increasing the motor speed, and a common operation section (T3),
wherein during the start operation section (T1), any one of three upper-arm switching elements of the inverter (420) is turned on, and the remaining two lower-arm switching elements unpaired with the turn-on upper-arm switching element are turned on to provide the predetermined current to the motor (230),
wherein during the mandatory acceleration section (T2), speed of the motor (230) is increased in response to a speed command without feeding back the output current (io) flowing in the motor (230),
wherein during the common operation section (T3), the driving unit (220) drives the motor (230) using the three-phase PWM scheme during a first section and the two-phase PWM scheme during a second section on the basis of the detected output current (io) from the output current detection unit (E).

3. The washing machine according to claim 1, wherein:
in the eccentricity sensing sections (Tm, To, Tq) from among a dehydration cycle, the motor is driven according to the three-phase PWM scheme; and
in the dehydration sections (Tn, Tp, Tr) from among the dehydration cycle, the motor is driven according to the two-phase PWM scheme.

4. The washing machine according to claim 2, wherein the driving unit (220) divides the common operation section (T3) into the first section for the three-phase PWM scheme and the second section for the two-phase PWM scheme in response to temperature, so as to be driven in different ways according to the three-phase PWM section and the two-phase PWM section in response to the temperature.

5. The washing machine according to claim 2, wherein the driving unit (220) divides the common operation section (T3) thereof into the first section for the three-phase PWM scheme and the second section for the two-phase PWM scheme in response to a rotation speed of the motor, so as to be driven in different ways according to the three-phase PWM section and the two-phase PWM section in response to the rotation speed of the motor.

6. The washing machine according to claim 1, wherein:
the driving unit (220) further includes a position detection unit (235) to detect a rotor position of the motor, and
the inverter controller (430) is configured to control the inverter on the basis of the detected rotor position and the output current.

7. The washing machine according to claim 1, wherein by the two-phase PWM scheme, during at least some sections from among a period in which upper-arm or lower-arm switching elements of two pairs from among the three pairs of switching elements are repeatedly turned on and off, the remaining one pair of upper-arm or lower-arm switching elements from among the three pairs of upper-arm or lower-arm switching elements is turned on or off.

8. The washing machine according to claim 1, wherein:
a sinusoidal wave flows in three phases of the motor according to the two-phase PWM scheme.

9. The washing machine according to claim 2,
wherein the inverter controller (430) is configured to output a switching control signal based on the two-phase PWM scheme to the inverter during the second section, and output a switching control signal based on the three-phase PWM scheme to the inverter during the first section.

10. The washing machine according to claim 7, wherein the some sections may be a period corresponding to an electric angle of 120° of the motor.

## Patentansprüche

1. Waschmaschine (100), die Folgendes umfasst:
einen Waschbottich (120);
einen Motor (230) zum Drehen des Waschbottichs; und
eine Ansteuereinheit (220) zum Ansteuern des Motors (230) durch einen Betriebsabschnitt des Motors,
wobei die Ansteuereinheit (220) Folgendes umfasst:
einen Wechselrichter (420), um die festgelegte Gleichspannung in Wechselspannung umzusetzen, die eine festgelegte Frequenz hat, und um die Wechselspannung an den Motor auszugeben;
eine Ausgangsstrom-Detektionseinheit (E) zum Detektieren des Ausgangsstroms (io), der in dem Motor fließt, und
eine Wechselrichter-Steuerung (430) zum Steuern des Wechselrichters in Reaktion auf den Ausgangsstrom,
wobei der Wechselrichter (420) drei Paare Schaltelemente umfasst, wobei jedes Paar ein Schaltelement (Sa, Sb, Sc) für den oberen Zweig und ein Schaltelement (S'a, S'b, S'c) für den unteren Zweig umfasst,
wobei sich während eines Abschnitts (T1) zum Erfassen der Wäschemenge der Waschbottich (120) mit einer ersten Drehzahl (v1) dreht,
wobei sich während eines ersten Abschnitts (Tm) zum Erfassen einer Exzentrizität nach dem Abschnitt (T1) zum Erfassen der Wäschemenge der Waschbottich (120) mit einer zweiten Drehzahl (v2) dreht, die höher als die erste Drehzahl (v1) ist,
wobei sich während eines ersten Abschnitts (Tn) zum Entwässern nach dem ersten Abschnitt (Tm) zum Erfassen einer Exzentrizität der Waschbottich (120) mit einer dritten Drehzahl (v3) dreht, die höher als die zweite Drehzahl (v2) ist,
wobei während eines zweiten Abschnitts (To) zum Erfassen einer Exzentrizität nach dem ersten Abschnitt (Tn) zum Entwässern der Waschbottich (120) mit der zweiten Drehzahl (v2) dreht, die niedriger als die dritte Drehzahl (v3) ist,
wobei die Ansteuereinheit (220) konfiguriert ist, den Motor (230) unter Verwendung eines Pulsbreitenmodulationsschemas (PWM-Schema) anzusteuern, um ein dreiphasiges PWM-Schema und ein zweiphasiges PWM-Schema in einer allgemeinen Betriebsart zu mischen, und um den Motor unter Verwendung des gemischten PWM-Schemas anzusteuern,
wobei der Motor (230) in dem Abschnitt (T1) zum Erfassen der Wäschemenge und in dem ersten Abschnitt (Tm) zum Erfassen einer Exzentrizität und in dem zweiten Abschnitt (To) zum Erfassen einer Exzentrizität auf der Basis des dreiphasigen PWM-Schemas angesteuert wird,
wobei der Motor (230) in dem ersten Abschnitt (Tn) zum Entwässern auf der Basis des zweiphasigen PWM-Schemas angesteuert wird,
wobei in dem dreiphasigen PWM-Schema drei Paare Schaltelemente (Sa, Sb, Sc, S'a, S'b, S'c) Einschalt- und Ausschaltvorgänge wiederholen, und
wobei in dem zweiphasigen PWM-Schema Schaltelemente (Sa, Sb) des oberen Zweigs und Schaltelemente (S'a, S'b) des unteren Zweigs von zwei Paaren der drei Paare Schaltelemente (Sa, Sb, Sc, S'a, S'b, S'c) Einschalt- und Ausschaltvorgänge wiederholen, und wobei ein Schaltelement (Sc) des oberen Zweigs oder ein Schaltelement (S'c) des unteren Zweigs in dem verbleibenden einen Paar der drei Paare Schaltelemente (Sa, Sb, Sc, S'a, S'b, S'c) in einem eingeschalteten Zustand bleibt und das jeweils andere des Schaltelements (Sc) des oberen Zweigs und des Schaltelements (S'c) des unteren Zweigs in dem verbleibenden einen Paar in einem ausgeschalteten Zustand bleibt.

2. Waschmaschine nach Anspruch 1, wobei der Betriebsabschnitt des Motors in einen Startbetriebsabschnitt (T1), einen vorgeschriebenen Beschleunigungsabschnitt (T2) zum vorgeschriebenen Erhöhen der Motordrehzahl und in einen allgemeinen Betriebsabschnitt (T3) unterteilt ist,
wobei während des Startbetriebsabschnitts (T1) eines der drei Schaltelemente des Wechselrichters (420) im oberen Zweig eingeschaltet ist, und die verbleibenden zwei Schaltelemente des unteren Zweigs, die nicht mit dem eingeschalteten Schaltelement des oberen Zweigs gepaart sind, eingeschaltet sind, um den festgelegten Strom für den Motor (230) bereitzustellen,
wobei während des vorgeschriebenen Beschleunigungsabschnitts (T2) die Drehzahl des Motors (230) in Reaktion auf einen Beschleunigungsbefehl erhöht wird, ohne den Ausgangsstrom (io), der in dem Motor fließt (230), zurückzukoppeln,
wobei während des allgemeinen Betriebsabschnitts (T3) die Ansteuereinheit (220) den Motor (230) während eines ersten Abschnitts unter Verwendung des dreiphasigen PWM-Schemas und während eines zweiten Abschnitts unter Verwendung des zweiphasigen PWM-Schemas auf der Basis des detektierten Ausgangsstroms (io) von der Ausgangsstrom-Detektionseinheit (E) ansteuert.

3. Waschmaschine nach Anspruch 1, wobei:
in den Abschnitten (Tm, To, Tq) zum Erfassen einer Exzentrizität bei einem Entwässerungszyklus der Motor entsprechend dem dreiphasigen PWM-Schema angesteuert wird; und
in den Abschnitten (Tn, Tp, Tr) zum Entwässern bei dem Entwässerungszyklus der Motor entsprechend dem zweiphasigen PWM-Schema angesteuert wird.

4. Waschmaschine nach Anspruch 2, wobei die Ansteuereinheit (220) den allgemeinen Betriebsabschnitt (T3) in den ersten Abschnitt für das dreiphasige PWM-Schema und den zweiten Abschnitt für das zweiphasige PWM-Schema in Reaktion auf die Temperatur unterteilt, so dass sie in Reaktion auf die Temperatur entsprechend dem dreiphasigen PWM-Abschnitt und dem zweiphasigen PWM-Abschnitt unterschiedlich angesteuert wird.

5. Waschmaschine nach Anspruch 2, wobei die Antriebseinheit (220) den allgemeinen Betriebsabschnitt (T3) in den ersten Abschnitt für das dreiphasige PWM-Schema und den zweiten Abschnitt für das zweiphasige PWM-Schema in Reaktion auf eine Drehzahl des Motors unterteilt, so dass sie in Reaktion auf die Drehzahl des Motors entsprechend dem dreiphasigen PWM-Abschnitt und dem zweiphasigen PWM-Abschnitt unterschiedlich angesteuert wird.

6. Waschmaschine nach Anspruch 1, wobei:
die Ansteuereinheit (220) ferner eine Positionsdetektionseinheit (235) zum Detektieren einer Rotorposition des Motors umfasst, und
die Wechselrichtersteuerung (430) konfiguriert ist, den Wechselrichtung auf der Basis der detektierten Rotorposition und des Ausgangsstroms zu steuern.

7. Waschmaschine nach Anspruch 1, wobei durch das zweiphasige PWM-Schema während einiger Abschnitte einer Zeitspanne, in der ein Schaltelement des oberen Zweigs oder des unteren Zweigs von zwei Paaren der drei Paare Schaltelemente wiederholt ein- und ausgeschaltet wird, das verbleibende eine Paar Schaltelemente des oberen Zweigs oder des unteren Zweigs der drei Paare Schaltelemente des oberen Zweigs oder des unteren Zweigs ein- oder ausgeschaltet wird.

8. Waschmaschine nach Anspruch 1, wobei:
eine Sinuswelle in drei Phasen des Motors entsprechend dem zweiphasigen PWM-Schema fließt.

9. Waschmaschine nach Anspruch 2,
wobei die Wechselrichtersteuerung (430) konfiguriert ist, während des zweiten Abschnitts ein Schaltsteuersignal auf der Basis des zweiphasigen PWM-Schemas an den Wechselrichter auszugeben, und während des ersten Abschnitts ein Schaltsteuersignal auf der Basis des dreiphasigen PWM-Schemas an den Wechselrichter auszugeben.

10. Waschmaschine nach Anspruch 7, wobei die einigen Abschnitte eine Zeitspanne sein können, die einem elektrischen Winkel des Motors von 120° entspricht.

## Revendications

1. Machine à laver (100) comportant :
une cuve de lavage (120) ;
un moteur (230) pour faire tourner la cuve de lavage ; et
une unité d'entraînement (220) pour entraîner le moteur (230) par une partie de fonctionnement du moteur,
dans laquelle l'unité d'entraînement (220) comporte :
un onduleur (420) pour convertir une alimentation en courant continu (DC) prédéterminée en alimentation en courant alternatif (AC) ayant une fréquence prédéterminée, et pour fournir l'alimentation AC au moteur ;
une unité de détection de courant de sortie (E) pour détecter un courant de sortie (io) circulant dans le moteur, et
une commande d'onduleur (430) pour commander l'onduleur en réponse au courant de sortie,
dans laquelle l'onduleur (420) inclut trois paires d'éléments de commutation, chaque paire incluant un élément de commutation de bras supérieur (Sa, Sb, Sc) et un élément de commutation de bras inférieur (S'a, S'b, S'c),
dans laquelle pendant une partie de détection de quantité de linge (T1), la cuve de lavage (120) tourne à une première vitesse de rotation (v1),
dans laquelle pendant une première partie de détection d'excentricité (Tm) après la partie de détection de quantité de linge (T1), la cuve de lavage (120) tourne à une deuxième vitesse de rotation (v2) supérieure à la première vitesse de rotation (v1),
dans laquelle pendant une première partie de déshydratation (Tn) après la première partie de détection d'excentricité (Tm), la cuve de lavage (120) tourne à une troisième vitesse de rotation (v3) supérieure à la deuxième vitesse de rotation (v2),
dans laquelle pendant une seconde partie de détection d'excentricité (To) après la première partie de déshydratation (Tn), la cuve de lavage (120) tourne à la deuxième vitesse de rotation (v2) inférieure à la troisième vitesse de rotation (v3),
dans laquelle l'unité d'entraînement (220) est configurée pour entraîner le moteur (230) en utilisant un schéma de modulation de largeur d'impulsion (PWM), pour mélanger un schéma PWM à trois phases et un schéma PWM à deux phases dans un mode de fonctionnement commun, et pour entraîner le moteur en utilisant le schéma PWM mixte,
dans laquelle le moteur (230) est entraîné sur la base du schéma PWM à trois phases dans la partie de détection de quantité de linge (T1), la première partie de détection d'excentricité (Tm) et la seconde partie de détection d'excentricité (To),
dans laquelle le moteur (230) est entraîné sur la base du schéma PWM à deux phases dans la première partie de déshydratation (Tn),
dans laquelle dans le schéma PWM à trois phases, trois paires d'éléments de commutation (Sa, Sb, Sc, S'a, S'b, S'c) répètent des opérations de passage à l'état passant et à l'état bloqué, et
dans laquelle dans le schéma PWM à deux phases, des éléments de commutation de bras supérieur (Sa, Sb) et des éléments de commutation de bras inférieur (S'a, S'b) de deux paires parmi trois paires d'éléments de commutation (Sa, Sb, Sc, S'a, S'b, S'c) répètent des opérations de passage à l'état passant et à l'état bloqué, et un élément parmi un élément de commutation de bras supérieur (Sc) ou un élément de commutation de bras inférieur (S'c) dans la paire restante parmi les trois paires d'éléments de commutation (Sa, Sb, Sc, S'a, S'b, S'c) reste dans un état passant et l'autre élément parmi l'élément de commutation de bras supérieur (Sc) ou l'élément de commutation de bras inférieur (S'c) dans la paire restante reste dans un état bloqué.

2. Machine à laver selon la revendication 1, dans laquelle la partie de fonctionnement du moteur est divisée en une partie de fonctionnement au démarrage (T1), une partie d'accélération obligatoire (T2) pour augmenter obligatoirement la vitesse de moteur, et une partie de fonctionnement commun (T3),
dans laquelle pendant la partie de fonctionnement au démarrage (T1), un élément quelconque parmi trois éléments de commutation de bras supérieur de l'onduleur (420) est passé à l'état passant, et les deux autres éléments de commutation de bras inférieur restants non appariés avec l'élément de commutation de bras supérieur passés à l'état passant sont passés à l'état passant pour fournir le courant prédéterminé au moteur (230),
dans laquelle pendant la partie d'accélération obligatoire (T2), une vitesse du moteur (230) est augmentée en réponse à une instruction de vitesse sans réinjecter le courant de sortie (io) circulant dans le moteur (230),
dans laquelle pendant la partie de fonctionnement commun (T3), l'unité d'entraînement (220) entraîne le moteur (230) en utilisant le schéma PWM à trois phases pendant une première partie et le schéma PWM à deux phases pendant une seconde partie sur la base du courant de sortie (io) détecté provenant de l'unité de détection de courant de sortie (E).

3. Machine à laver selon la revendication 1, dans laquelle :
dans les parties de détection d'excentricité (Tm, To, Tq) parmi un cycle de déshydratation, le moteur est entraîné en fonction du schéma PWM à trois phases ; et
dans les parties de déshydratation (Tn, Tp, Tr) parmi un cycle de déshydratation, le moteur est entraîné en fonction du schéma PWM à deux phases.

4. Machine à laver selon la revendication 2, dans laquelle l'unité d'entraînement (220) divise la partie de fonctionnement commun (T3) en la première partie pour le schéma PWM à trois phases et la seconde partie pour le schéma PWM à deux phases en réponse à une température, de manière à être entraînée de différentes manières en fonction de la partie PWM à trois phases et de la partie PWM à deux phases en réponse à la température.

5. Machine à laver selon la revendication 2, dans laquelle l'unité d'entraînement (220) divise la partie de fonctionnement commun (T3) de celle-ci en la première partie pour le schéma PWM à trois phases et la seconde partie pour le schéma PWM à deux phases en réponse à une vitesse de rotation du moteur, de manière à être entraînée de différentes manières en fonction de la partie PWM à trois phases et de la partie PWM à deux phases en réponse à la vitesse de rotation du moteur.

6. Machine à laver selon la revendication 1, dans laquelle :
l'unité d'entraînement (220) inclut en outre une unité de détection de position (235) pour détecter une position de rotor du moteur, et
la commande d'onduleur (430) est configurée pour commander l'onduleur sur la base de la position de rotor détectée et du courant de sortie.

7. Machine à laver selon la revendication 1, dans laquelle, par le schéma PWM à deux phases, pendant au moins certaines parties parmi une période dans laquelle des éléments de commutation de bras supérieur ou de bras inférieur de deux paires parmi les trois paires d'éléments de commutation sont passés à l'état passant et à l'état bloqué de manière répétée, la paire restante d'éléments de commutation de bras supérieur ou de bras inférieur parmi les trois paires d'éléments de commutation de bras supérieur ou de bras inférieur est passée à l'état passant ou à l'état bloqué.

8. Machine à laver selon la revendication 1, dans laquelle :
une onde sinusoïdale circule dans trois phases du moteur en fonction du schéma PWM à deux phases.

9. Machine à laver selon la revendication 2,
dans laquelle la commande d'onduleur (430) est configurée pour délivrer en sortie à l'onduleur un signal de commande de commutation basé sur le schéma PWM à deux phases pendant la seconde partie, et délivrer en sortie à l'onduleur un signal de commande de commutation basé sur le schéma PWM à trois phases pendant la première partie.

10. Machine à laver selon la revendication 7, dans laquelle les certaines parties peuvent être une période correspondant à un angle électrique de 120° du moteur.
